(19) **Europäisches Patentamt**
**European Patent Office**
**Office européen des brevets**

(11) **EP 2 735 551 A1**

(12) **EUROPEAN PATENT APPLICATION**
published in accordance with Art. 153(4) EPC

(43) Date of publication:
**28.05.2014 Bulletin 2014/22**

(21) Application number: **12815300.4**

(22) Date of filing: **17.07.2012**

(51) Int Cl.:
*C03B 18/20* (2006.01)     *C03C 3/078* (2006.01)
*C03C 3/085* (2006.01)     *C03C 3/087* (2006.01)
*C03C 3/089* (2006.01)     *C03C 3/091* (2006.01)
*C03C 3/093* (2006.01)

(86) International application number:
**PCT/JP2012/068088**

(87) International publication number:
**WO 2013/011980 (24.01.2013 Gazette 2013/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2011   JP 2011159288**

(71) Applicant: **Asahi Glass Company, Limited
Tokyo 100-8405 (JP)**

(72) Inventors:
• **TANII, Shiro
Tokyo 100-8405 (JP)**
• **FUKUHARA, Kazuhiro
Tokyo 100-8405 (JP)**

(74) Representative: **Müller-Boré & Partner
Patentanwälte PartG mbB
Friedenheimer Brücke 21
80639 München (DE)**

(54) **METHOD FOR PRODUCING FLOAT GLASS**

(57)     This invention relates to a method for producing a float glass, including the steps of: cooling a molten glass while being caused to flow in a predetermined direction on molten tin within a float bath; and forming the molten glass into a band plate shape, in which an atmosphere above the molten glass is a reducing atmosphere containing a hydrogen gas, the atmosphere contains an additive substance comprising either sulfur or chlorine, and the concentration of the additive substance in the atmosphere, above at least a portion of the molten glass, is 1 $mg/Nm^3$ or higher.

Fig. 1

**Description**

TECHNICAL FIELD

The present invention relates to a method for producing a float glass.

BACKGROUND OF THE INVENTION

A method for producing a float glass includes a process in which a molten glass is cooled while being caused to flow in a predetermined direction on molten tin within a float bath (hereinafter also referred to simply as "bath") and is thereby formed into a band plate shape (see, for example, Patent Document 1).
The atmosphere in the bath is often a reducing atmosphere which contains hydrogen gas, from the standpoint of preventing the molten tin from oxidizing. The hydrogen gas reacts with oxygen gas which has entered from the outside, thereby preventing oxidation of the molten tin.
Meanwhile, Patent Document 1 discloses that an oxidizing atmosphere is used as the atmosphere within the bath. An oxidizing atmosphere reduces the surface tension of the molten glass and thereby facilitates the forming of the molten glass. Patent Document 1 discloses an atmosphere which contains either sulfurous acid ($SO_2$) gas or sulfur trioxide ($SO_3$) gas is optimal as the oxidizing atmosphere.
Incidentally, in a reducing atmosphere containing hydrogen gas, sulfurous acid gas and sulfur trioxide gas are converted to hydrogen sulfide ($H_2S$) gas or the like and cannot be stably present, thereby becoming unable to reduce the surface tension of the molten glass.

BACKGROUND ART DOCUMENT

PATENT DOCUMENT

Patent Document 1: JP-B-S46-41915

SUMMARY OF THE INVENTION

PROBLEMS THAT THE INVENTION IS TO SOLVE

There are cases where the surfaces of a float glass are treated with a buffered hydrofluoric acid (hereinafter also referred to simply as "BHF") for the purposes of removing dirt on the surfaces, roughening the surfaces and the like. The BHF is a liquid chemical obtained by mixing hydrofluoric acid (HF) with ammonium fluoride ($NH_4F$).
However, there have been cases where the float glass formed in a reducing atmosphere containing hydrogen gas considerably increases in haze (cloudiness) through the BHF treatment. It was presumed that the glass surface which had been exposed to the reducing atmosphere was in the state of having been separated into a plurality of components as separate phases and that a specific component reacts with the BHF to cause foreign-matter adhesion to the glass surface.
An object of the invention, which has been accomplished in view of the problem, is to provide a method for producing a float glass capable of suppressing increases in haze through a BHF treatment.

MEANS FOR SOLVING THE PROBLEMS

In order to achieve the above object, the invention provides a method for producing a float glass, comprising the steps of: cooling a molten glass while being caused to flow in a predetermined direction on molten tin within a float bath; and forming the molten glass into a band plate shape, wherein an atmosphere above the molten glass is a reducing atmosphere containing a hydrogen gas, the atmosphere contains an additive substance comprising either sulfur or chlorine, and the concentration of the additive substance in the atmosphere, above at least a portion of the molten glass, is 1 mg/Nm$^3$ or higher.
In the method for producing a float glass, it is preferable that the concentration of the additive substance in the atmosphere, above at least a position at which a viscosity of the molten glass is $1 \times 10^6$ dPa·s or less, is 1 mg/Nm$^3$ or higher.
In the method for producing a float glass, it is preferable that the additive substance is sulfur and the float glass has a sulfur concentration of 100 at. ppm or higher.
In the method for producing a float glass, it is preferable that the additive substance is chlorine and the float glass has a chlorine concentration of 0.3% by mass or higher.
In the method for producing a float glass, it is preferable that the float glass contains, in terms of % by mass

based on oxides, $SiO_2$: 50 to 66%, $Al_2O_3$: 10.5 to 24%, $B_2O_3$: 0 to 12%, MgO: 0 to 8%, CaO: 0 to 14.5%, SrO: 0 to 24%, BaO: 0 to 13.5%, $ZrO_2$: 0 to 5%, and SnO: 0 to 3%, provided that MgO+CaO+SrO+BaO is 9 to 29.5%, and a total content of alkali metal oxides is 0.1 % or less.

In the method for producing a float glass, it is preferable that the float glass contains, in terms of % by mass based on oxides, $SiO_2$: 58 to 66%, $Al_2O_3$: 15 to 22%, $B_2O_3$: 5 to 12%, MgO: 0 to 8%, CaO: 0 to 9%, SrO: 3 to 12.5%, BaO: 0 to 2%, and SnO: 0 to 1%, provided that MgO+CaO+SrO+BaO is 9 to 18%, and a total content of alkali metal oxides is 0.1 % or less.

In the method for producing a float glass, it is preferable that the float glass comprises, in terms of % by mass based on oxides, $SiO_2$: 65 to 75%, $Al_2O_3$: 0 to 3%, CaO: 5 to 15%, MgO: 0 to 15%, $Na_2O$: 10 to 20%, $K_2O$: 0 to 3%, $Li_2O$: 0 to 5%, $Fe_2O_3$: 0 to 3%, and $TiO_2$: 0 to 5%, $CeO_2$: 0 to 3%, BaO: 0 to 5%, SrO: 0 to 5%, $B_2O_3$: 0 to 5%, ZnO: 0 to 5%, $ZrO_2$: 0 to 5%, $SnO_2$: 0 to 3%, and $SO_3$: 0 to 0.5%.

## ADVANTAGE OF THE INVENTION

According to the invention, the method for producing a float glass capable of suppressing increases in haze through a BHF treatment can be provided.

## BRIEF DESCRIPTION OF THE DRAWINGS

[Fig. 1] Fig. 1 is an explanatory drawing of a method for producing a float glass according to one embodiment of the invention, and is a sectional plan view of a float bath.

[Fig. 2] Fig. 2 is a sectional side view of the float bath of Fig. 1.

## MODE FOR CARRYING OUT THE INVENTION

The method for float glass production of this embodiment includes melting process, forming process, annealing process, cutting process, and polishing process. Incidentally, the polishing process may be omitted depending on applications of the float glass.

The melting process is a process in which a raw material for glass prepared by mixing a plurality of feed materials is melted to obtain a molten glass. The raw material for glass is introduced into a melting furnace and then melted by means of the radiant heat of the flames ejected from burners, thereby giving a molten glass. The molten glass is continuously fed to the surface of molten tin within a bath.

The forming process is a process in which the molten glass is cooled while being caused to flow in a predetermined direction on the molten tin within the bath and is thereby formed into a band plate shape. The sheet-shaped glass obtained by forming the molten glass into a band plate shape is drawn up from the molten tin in the vicinity of the outlet of the bath and conveyed into an annealing furnace.

The annealing process is a process in which the sheet-shaped glass is annealed in the annealing furnace. The sheet-shaped glass is annealed while being conveyed from the inlet toward the outlet of the annealing furnace. The outlet of the annealing furnace is open to the outside air, and the atmosphere within the annealing furnace hence is composed of air and the like.

The cutting process is a process in which the sheet-shaped glass that has been annealed is cut into a predetermined size with a cutter. In this process, both width-direction edges (so-called selvages) of the sheet-shaped glass are cut off. This is because both width-direction edges of the sheet-shaped glass have an increased thickness due to the influence of surface tension and the like.

The polishing process is a process in which after the cutting process, that surface of the two main surfaces of the sheet-shaped glass which was in contact with the molten tin within the bath (hereinafter, the surface is referred to as "bottom surface") is polished. The purpose of the polishing is, for example, to smooth the sheet-shaped glass. Of both main surfaces of the sheet-shaped glass, the surface on the side opposite to the bottom surface (that surface is hereinafter referred to as "top surface") usually is not polished.

Thus, a float glass as a product is obtained. Applications of the float glass are not particularly limited. However, examples thereof include substrates for displays such as liquid-crystal displays and organic EL displays, cover glasses for displays, and substrates for photomasks.

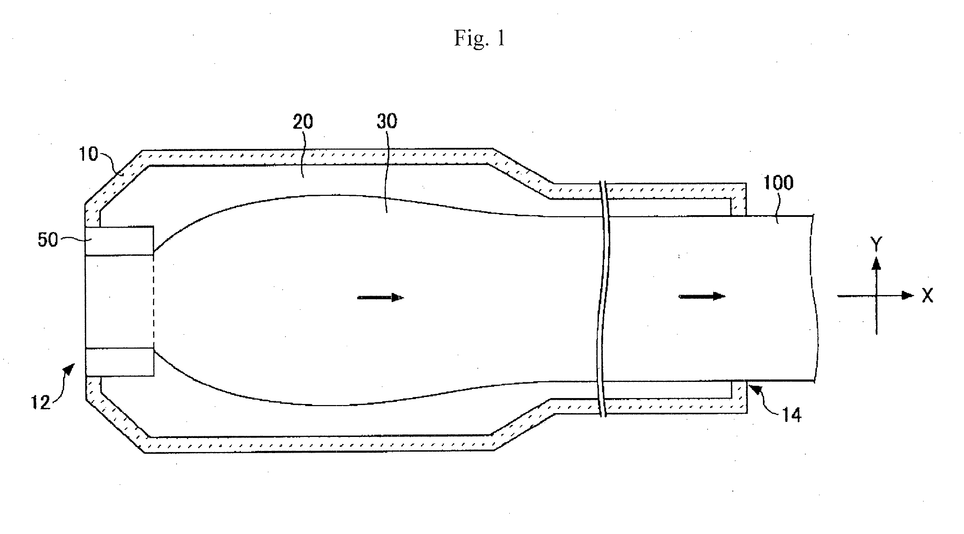

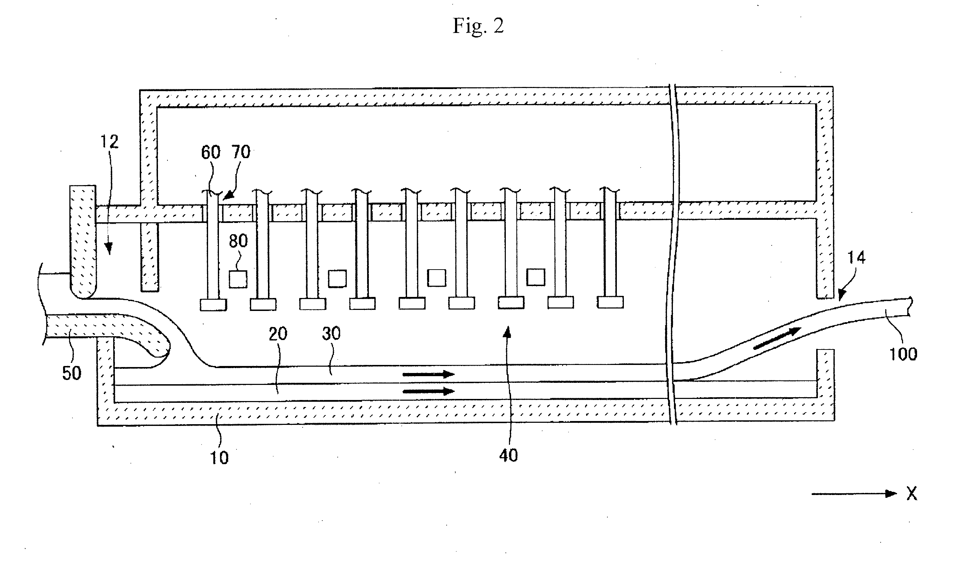

Details of the forming process are explained below on the basis of Fig. 1 and Fig. 2.

Fig. 1 is an explanatory drawing of a method for producing a float glass according to one embodiment of the invention, and is a sectional plan view of a float bath. Fig. 2 is a sectional side view of the float bath of Fig. 1.

The forming process is a process in which a molten glass 30 is cooled while being caused to flow continuously in a predetermined direction (direction X) on molten tin 20 within a bath 10 and is thereby formed into a band plate shape. The molten glass 30 is formed by utilizing the horizontal upper surface of the molten tin 20. The atmosphere 40 within the bath 10 is a reducing atmosphere containing hydrogen gas, from the standpoint of preventing the molten tin 20 from oxidizing. The inside of the bath 10 is kept at a positive pressure in order to prevent the outside air from coming thereinto.

The bath 10 is equipped with a spout lip 50, heaters 60, gas supply channels 70, gas discharge channels 80 and the like.

The spout lip 50 is a feed channel for feeding the molten glass 30 into the bath 10, and is disposed at the inlet 12 of the bath 10. The spout lip 50 has been connected to the melting furnace in which the molten glass 30 is produced.

The heaters 60 serve to heat the inside of the bath 10, and are hung down from the ceiling of the bath 10 as shown, for example, in Fig. 2. A plurality of heaters 60 has been disposed, for example, in a matrix arrangement at intervals along the flow direction (direction X) and width direction (direction Y) of the molten glass 30.

The output of the heaters 60 is controlled so that the temperature of the molten glass 30 declines from the inlet 12 toward the outlet 14 of the bath 10. Furthermore, the output of the heaters 60 is controlled so that the temperature of the molten glass 30 is even throughout the width direction (direction Y).

The gas supply channels 70 are channels for supplying a reducing gas to the inside of the bath 10, and are disposed, for example, in the ceiling of the bath 10 as shown in Fig. 2. A plurality of gas supply channels 70 has been disposed at intervals along a predetermined direction (direction X).

The reducing gas may be a mixed gas composed of hydrogen gas and nitrogen gas. The proportion of hydrogen gas in the reducing gas is, for example, 0.1 to 15% by volume.

The gas discharge channels 80 are channels for discharging the atmosphere 40 within the bath 10, and have been disposed, for example, in a sidewall of the bath 10 as shown in Fig. 2. A plurality of gas discharge channels 80 has been disposed at intervals along a predetermined direction (direction X).

As shown in Fig. 2, the sheet-shaped glass 100 obtained by forming the molten glass 30 into a band plate shape is drawn up from the molten tin 20 in the vicinity of the outlet 14 of the bath 10. Thereafter, the sheet-shaped glass 100 undergoes an annealing process, cutting process, polishing process, etc. to be a float glass as a product.

Incidentally, there are cases where float glasses are subjected to a surface treatment with a buffered hydrofluoric acid (BHF) for the purposes of removing dirt on the surfaces, roughening the surface and the like. The BHF is a liquid chemical obtained by mixing hydrofluoric acid (HF) with ammonium fluoride ($NH_4F$).

The present inventors have found, through experiments, that the haze (cloudiness) of a float glass which has undergone a BHF treatment is affected by the composition of the atmosphere 40 above the molten glass 30. Furthermore, the inventors examined the composition of each of float glasses which, after a BHF treatment, had a haze not lower than a threshold value, and have found that there is a correlation between the sulfur concentration or chlorine concentration in the float glasses and the haze thereof.

Consequently, in this embodiment, the concentration of the additive substance constituted of sulfur or chlorine in the atmosphere 40, above at least a portion the molten glass 30, is regulated to 1 mg/$Nm^3$ or higher (preferably 5 mg/$Nm^3$ or higher) in order to inhibit the haze from increasing. The term "$Nm^3$" indicates normal-state cubic meter, and represents the volume of the gas per $m^3$ in terms of volume in the normal state (1 atm, 0°C). Moreover, in this description, sulfur and chlorine are hereinafter inclusively referred to as "additive substance". It is presumed that the presence of the additive substance inhibits the top surface, which is exposed to the atmosphere 40, from suffering phase separation and renders the structure of the top surface even. Since the structure of the top surface is rendered even, the strength of the float glass can also be improved.

The structure of the top surface is apt to be affected by the composition of the high-temperature part of the atmosphere 40. Consequently, it is preferred, from the standpoint of sufficiently obtaining the effect, that the concentration of the additive substance in the atmosphere 40, above at least a position at which the viscosity of the molten glass 30 becomes $10^6$ dPa·s or less, should be 1 mg/$Nm^3$ or higher. More preferably, the concentration thereof is 5 mg/$Nm^3$ or higher.

Here, as the viscosity of the molten glass 30, the viscosity of the width-direction center of the molten glass 30 is used as a representative value. Since the temperature of the molten glass 30 is approximately even throughout the width direction (direction Y), the viscosity of the molten glass 30 also is substantially even throughout the width direction. Incidentally, the concentration of the additive substance as measured at any position downstream from (on the lower-temperature side of) the position at which the viscosity of the width-direction center of the molten glass 30 becomes $10^6$ dPa·s is not particularly limited, and may be 1 mg/$Nm^3$ or higher or may be less than 1 mg/$Nm^3$.

On the other hand, in the case where the concentration of the additive substance in the atmosphere 40 is too high, a solid sulfide or chloride is produced and falls onto the upper surface of the molten glass 30. Consequently, from the standpoint of inhibiting the falling of such sulfide or chloride, it is preferable that the concentration of the additive substance in the atmosphere 40 should be 10 mg/$Nm^3$ or less in the case of sulfur or be 20 mg/$Nm^3$ or less in the case of chlorine.

The additive substance in the atmosphere 40 is present mainly as the gas of a compound. Examples of the compound include sulfides such as hydrogen sulfide ($H_2S$) and chlorides such as hydrogen chloride (HCl). A method for measuring the sulfur concentration/chlorine concentration in the atmosphere 40 will be described later.

Methods for regulating the concentration of an additive substance in the atmosphere 40 are not particularly limited, and there are, for example, the following methods (1) and (2).

Method (1) is a method in which the concentration of an additive substance in the molten tin 20 is regulated. As the concentration of the additive substance in the molten tin 20 becomes higher, the amount of the sulfur or chlorine which is released from the molten tin 20 into the atmosphere 40 increases and, hence, the concentration of the additive substance in the atmosphere 40 increases.

The regulation of the concentration of an additive substance in the molten tin 20 is accomplished by supplying sulfur, a sulfur compound, or a chlorine compound to the molten tin 20. This supply may be conducted at any position within the bath 10 so long as sulfur or the compound is supplied to that portion of the upper surface of the molten tin 20 which is not covered with the molten glass 30. This is because the molten tin 20 also flows due to the flow of the molten glass 30 and the molten tin 20 is homogenized thereby.

As the sulfur compound, use is made, for example, of a sulfide such as tin sulfide (SnS) or a sulfate such as calcium sulfate ($CaSO_4$); the valence of the sulfur is not particularly limited. Preferred of these is tin sulfide, which is effective in inhibiting the molten tin 20 from being contaminated or altered and which has a high boiling point. As the chlorine compound, use is made, for example, of tin chloride ($SnCl_2$), sodium hypochlorite (NaClO), and the like. Preferred of these is tin chloride, which is effective in inhibiting the molten tin 20 from being contaminated or altered and which has a high boiling point.

The concentration of an additive substance in the molten tin 20 is set in accordance with the capacity and configuration of the bath 10, the gas feed rate and gas discharge rate for the atmosphere 40 and the like. However, the concentration thereof is, for example, 1 ppm by mass or higher. Thus, the concentration of the additive substance in the atmosphere 40, above at least a portion of the molten glass 30, can be regulated to 1 mg/Nm$^3$ or higher.

In the case where the additive substance is sulfur, the sulfur concentration in the molten tin 20 is preferably 3 ppm by mass or higher. In the case where the additive substance is chlorine, the chlorine concentration in the molten tin 20 is preferably 5 ppm by mass or higher.

Meanwhile, the sulfur concentration in the molten tin 20 may be 30 ppm by mass or less, from the standpoint of inhibiting tin sulfide from adhering to the bottom surface or top surface to form defects.

Method (2) is a method in which the concentration of an additive substance in the raw material for glass, which becomes the molten glass 30, is regulated. As the concentration of the additive substance in the raw material for glass becomes higher, the amount of the additive substance which is released from the molten glass 30 into the atmosphere 40 increases and, hence, the concentration of the additive substance in the atmosphere 40 increases. As routes for releasing the additive substance, there are a route via the molten tin 20 and a route not via the molten tin 20.

The regulation of the concentration of an additive substance in the raw material for glass is accomplished by adding sulfur, a sulfur compound, or a chlorine compound to the raw material for glass. As the sulfur compound, use is made, for example, of a sulfide such as tin sulfide (SnS) or a sulfate such as calcium sulfate ($CaSO_4$); the valence of the sulfur is not particularly limited. As the chlorine compound, calcium chloride ($CaCl_2$) may be used.

A large proportion of the additive substance in the raw material for glass is released into the atmosphere within the melting furnace, a small proportion thereof is released into the bath 10, and the remainder comes into the sheet-shaped glass 100 and hence into the float glass.

The amount of the sulfur, sulfur compound, or chlorine compound to be added to the raw material for glass is set in accordance with the concentration of the additive substance which is to remain in the float glass, the capacity and configuration of the bath 10, the gas feed rate and gas discharge rate for the atmosphere 40 and the like. For example, the concentration thereof is set so that the float glass has a residual sulfur concentration of 100 at. ppm or higher or a residual chlorine concentration of 0.3% by mass or higher. Thus, the concentration of the additive substance in the atmosphere 40, above at least a portion of the molten glass 30, can be regulated to 1 mg/Nm$^3$ or higher, as in the case of method (1).

The higher the temperature of the molten glass 30, the larger the amount of the additive substance which is released from the molten glass 30 into the atmosphere 40. In the case where a plurality of gas discharge channels 80 has been disposed at intervals along the flow direction of the molten glass 30 (direction X) as shown in Fig. 2, the gas is less apt to flow in the direction X and, hence, the concentration of the additive substance in the atmosphere 40 is proportional to the temperature of the molten glass 30. Namely, the value of the concentration thereof increases toward the upstream side (higher-temperature side).

In the case where the additive substance in the float glass is sulfur, the sulfur concentration therein is preferably 100 at. ppm or higher, more preferably 200 at. ppm or higher. In the case where the additive substance in the float glass is chlorine, the chlorine concentration therein is preferably 0.3% by mass or higher, more preferably 0.5% by mass or higher.

Meanwhile, the sulfur concentration in the float glass may be 2,000 at. ppm or less from the standpoints of inhibiting the molten glass 30 from foaming and of thus diminishing defects within the float glass. Similarly, the chlorine concentration therein may be 1.0% by mass or less, from the standpoints of inhibiting the molten glass 30 from foaming and of thus diminishing defects within the float glass.

In the case where the float glass is used as a substrate for liquid-crystal displays, this float glass is constituted of an alkali-free glass in which alkali metal oxides are not substantially contained. This is because alkali metal oxides exert an adverse influence on the displaying characteristics of the liquid-crystal displays.

For example, the float glass contains, in terms of % by mass based on oxides, $SiO_2$: 50 to 66%, $Al_2O_3$: 10.5 to 24%, $B_2O_3$: 0 to 12%, MgO: 0 to 8%, CaO: 0 to 14.5%, SrO: 0 to 24%, BaO: 0 to 13.5%, $ZrO_2$: 0 to 5%, and SnO: 0 to 3%, provided that MgO+CaO+SrO+BaO is 9 to 29.5%, and a total content of alkali metal oxides is 0.1% or less.

Moreover, the float glass contains, in terms of % by mass based on oxides, $SiO_2$: 58 to 66%, $Al_2O_3$: 15 to 22%, $B_2O_3$: 5 to 12%, MgO: 0 to 8%, CaO: 0 to 9%, SrO: 3 to 12.5%, BaO: 0 to 2%, and SnO: 0 to 1%, provided that MgO+CaO+SrO+BaO is 9 to 18%, and a total content of alkali metal oxides is 0.1% or less.

Although embodiments of the invention were explained above, the invention is not limited to those embodiments. Various modifications and substitutions can be made in the embodiments without departing from the scope of the invention.

For example, although the kind of glass in the float glass shown above as an embodiment is an alkali-free glass, the invention is not limited to this configuration. For example, the kind of glass in the float glass may be soda-lime glass.

In the case of soda-lime glass, it is preferable that this glass contains, in terms of % by mass based on oxides, $SiO_2$: 65 to 75%, $Al_2O_3$: 0 to 3%, CaO: 5 to 15%, MgO: 0 to 15%, $Na_2O$: 10 to 20%, $K_2O$: 0 to 3%, $Li_2O$: 0 to 5%, $Fe_2O_3$: 0 to 3%, and $TiO_2$: 0 to 5%, $CeO_2$: 0 to 3%, BaO: 0 to 5%, SrO: 0 to 5%, $B_2O_3$: 0 to 5%, ZnO: 0 to 5%, $ZrO_2$: 0 to 5%, $SnO_2$: 0 to 3%, and $SO_3$: 0 to 0.5%.

EXAMPLES

The invention is explained below in detail by reference to Examples and the like, but the invention should not be construed as being limited by the following.

[Methods for Measuring various Data]

(Sulfur Concentration/Chlorine Concentration in Atmosphere within Bath)

The atmosphere within a bath was sampled by suction with a pump through a quartz pipe which pierced a sidewall of the bath. The rate of suction was set at 2 NL/min (= $2 \times 10^{-3}$ $Nm^3$/min), and the total amount of gas sucked was 100 NL (= 0.1 $Nm^3$).

The quartz pipe had a length of 120 cm, and the suction port of the quartz pipe was disposed inside the wall of the bath at a distance of 70 cm from the wall surface. The suction port of the quartz pipe was disposed by the side of the position at which the viscosity of the width-direction center of the molten glass became $1 \times 10^5$ dPa·s. Part of the quartz pipe was exposed in the outside of the bath and was cooled with dry ice from the outside of the quartz pipe.

The atmosphere within the bath is cooled with the dry ice while passing through the quartz pipe, subsequently bubbled into water within an impinger, and then released into the outside air. Of the multiple components of the atmosphere, components having a high boiling point are condensed in the part of the quartz pipe which is cooled with dry ice, while components having a low boiling point are collected by the water within the impinger.

In the case where the additive substance was sulfur, the mass of the sulfur contained in washings obtained by washing the inside of the quartz pipe with hydrochloric acid and the mass of the sulfur contained in the water within the impinger were each determined with an ICP spectrometer (SPQ9600, manufactured by Seiko Instruments Inc.). In the case where the additive substance was chlorine, the inside of the quartz pipe was washed using an alkali solution in place of hydrochloric acid.

The concentration (mg/$Nm^3$) of the additive substance in the atmosphere within the bath was calculated by dividing the total mass amount (mg) of the additive substance (sulfur or chlorine) determined with the ICP spectrometer by the total amount ($Nm^3$) of the atmosphere which was sucked with the pump.

Incidentally, the bath had the same configuration as the bath 10 shown in Fig. 2 and was equipped with a plurality of gas discharge channels disposed at intervals along the direction X. Consequently, the concentration of the additive substance in the atmosphere increased toward upstream side of the molten-glass.

(Concentration of Additive Substance in Molten Tin)

A test sample was produced by taking up some of the molten tin within the bath (specifically, molten tin) with a sufficiently cooled iron ladle and then rapidly cooling the ladled molten tin. The position at which the molten tin was ladled was by the side of the position at which the viscosity of the width-direction center of the molten tin became $1 \times 10^5$ dPa·s.

The sulfur concentration in the test sample was determined with a carbon/sulfur analyzer (EMIA-920V, manufactured by Horiba Ltd.). This carbon/sulfur analyzer is an apparatus in which a test sample is burned in an oxygen stream and the resultant combustion gas is analyzed with an IR (infrared spectroscopic) detector.

The sulfur concentration in the molten tin was constant regardless of the position where the molten tin was ladled. This is because the molten tin also flows due to the flow of the molten glass and is hence homogenized, as stated above.

The chlorine concentration in the test sample was determined with a glow discharge mass spectrometry (GDMS) apparatus (GD-Profiler 2, manufactured by Horiba Ltd.). In this GDMS apparatus, a sample is sputtered with Ar plasma, and atoms ejected by the sputtering are made to cause atomic emission, thereby conducting elemental analysis.

(Concentration of Additive Substance in Float Glass)

The concentration of the additive substance in the float glass was determined with a fluorescent X-ray analyzer (ZSX 100e, manufactured by Rigaku Corp.). The site where an examination was made was intermediate between the bottom surface and the top surface and at the center of the glass.

(Haze of Float Glass after BHF Treatment)

A float glass in which the bottom surface had been polished was prepared as a test piece. The top surface was not polished.

The surfaces of the test piece were treated by immersing the test piece in a 25°C solution of a BHF for 20 minutes. As the BHF solution was used a solution obtained by mixing 10 parts by mass of 5% by mass aqueous HF solution with 90 parts by mass of 40% by mass aqueous $NH_4F$ solution.

After the BHF treatment, the test piece was cleaned by immersing the test piece in tap water, distilled water, and IPA (isopropyl alcohol) in this order and dried. The dried test piece was subjected to a haze measurement.

The haze (JIS K 7136: 2000 (ISO 14782: 1999)) of the test piece which had undergone the BHF treatment was measured with a hazeometer (NDH500, manufactured by Nippon Denshoku Kogyo K.K.). "Haze" is the percentage of transmitted light which has deflected from the incident light by 2.5° or more due to forward scattering to the transmitted light which has passed through the test piece. The optical axis of the light passing through the test piece was regulated so as to be parallel with the thickness direction of the test piece.

(Strength of Float Glass)

A float glass (thickness of 0.7 mm) in which the bottom surface had been polished was prepared as a test piece. The top surface was not polished.

The strength of the test piece was determined by placing the test piece on an annular ring so that the top surface of the test piece faced downward, pressing the bottom surface of the test piece with a ball disposed so that the center thereof was located on the center line of the ring, measuring the load W imposed when the test piece broke, and calculating the strength of the test piece using the following equation (1).

$$S = 5.2521 \times W - 2.5672 \qquad (1)$$

In equation (1), S represents the strength (GPa) of the test piece and W represents the breaking load (kN). The ring had a circular cross-sectional shape having a diameter of 5 mm, and the upper edge of the ring had a diameter of 30 mm. The ball had a diameter of 10 mm.

[EXAMPLE 1 to EXAMPLE 7]

In Example 1 to Example 7, float glasses were produced in the same manner, except that the recipe of the raw material for glass was changed. The raw materials for glass were prepared by adding a sulfate ($CaSO_4$) or a chloride

(CaCl$_2$) in various amounts to a base material obtained by mixing a plurality of feed materials.

Example 1, Example 4, and Example 7 are Comparative Examples. Example 2, Example 3, Example 5, and Example 6 are Examples according to the invention. In Example 1 to Example 6, the sulfate or the chloride was added in a slight amount. In Example 7, the amount of the sulfate or chloride added was 0. Consequently, the float glasses obtained in the respective Examples had substantially the same composition. The float glass obtained in Example 4 had a composition which contained, in terms of % by mass based on oxides, SiO$_2$: 59.5%, Al$_2$O$_3$: 17%, B$_2$O$_3$: 8%, MgO: 3.3%, CaO: 4%, SrO: 7.6%, BaO: 0.1%, and ZrO$_2$: 0.1%, provided that MgO+CaO+SrO+BaO is 15%, with the remainder being unavoidable impurities, and in which the total content of alkali metal oxides was 0.1% or less.

Those data on each of the float glasses of Example 1 to Example 7 were obtained after the concentration of the additive substance in the atmosphere within the bath became stable. The results of the measurements are shown in Table 1.

[Table 1]

| | Example 1 | Example 2 | Example 3 | Example 4 | Example 5 | Example 6 | Example 7 |
|---|---|---|---|---|---|---|---|
| Additive substance | sulfur | sulfur | sulfur | chlorine | chlorine | chlorine | none |
| Concentration of additive substance in glass (at. ppm) | 50 | 300 | 1500 | 1000 | 3000 | 5000 | 0 |
| Concentration of chlorine in glass (mass%) | - | - | - | 0.2 | 0.6 | 1 | - |
| Concentration of additive substance in atmosphere (mg/Nm$^3$) | 0.3 | 2.1 | 4.3 | 0.5 | 1.3 | 3.7 | 0 |
| Concentration of additive substance in molten tin (mass ppm) | 0.8 | 4 | 20 | 0.7 | 2.1 | 5.5 | 0 |
| Haze (%) | 4.2 | 0.9 | 0.2 | 3.9 | 0.5 | 0.1 | 10.4 |
| Strength (GPa) | 0.45 | 0.73 | 0.98 | 0.53 | 0.84 | 1.08 | 0.3 |

The present application is based on Japanese Patent Application No. 2011-159288 filed on July 20, 2011 and the contents are incorporated herein by reference.

DESCRIPTION OF REFERENCE NUMERALS AND SIGNS

10　Float bath
12　Inlet of float bath
14　Outlet of float bath
20　Molten tin
30　Molten glass
40　Atmosphere
50　Spout lip
60　Heater
70　Gas supply channel
80　Gas discharge channel

**Claims**

1. A method for producing a float glass, comprising the steps of:

cooling a molten glass while being caused to flow in a predetermined direction on molten tin within a float bath; and

forming the molten glass into a band plate shape,

wherein an atmosphere above the molten glass is a reducing atmosphere containing a hydrogen gas, the atmosphere contains an additive substance comprising either sulfur or chlorine, and the concentration of the additive substance in the atmosphere, above at least a portion of the molten glass, is 1 mg/Nm³ or higher.

2. The method for producing a float glass according to claim 1, wherein the concentration of the additive substance in the atmosphere, above at least a position at which a viscosity of the molten glass is $1 \times 10^6$ dPa·s or less, is 1 mg/Nm³ or higher.

3. The method for producing a float glass according to claim 1 or 2, wherein the additive substance is sulfur and the float glass has a sulfur concentration of 100 at. ppm or higher.

4. The method for producing a float glass according to claim 1 or 2, wherein the additive substance is chlorine and the float glass has a chlorine concentration of 0.3% by mass or higher.

5. The method for producing a float glass according to any one of claims 1 to 4, wherein the float glass contains, in terms of % by mass based on oxides, $SiO_2$: 50 to 66%, $Al_2O_3$: 10.5 to 24%, $B_2O_3$: 0 to 12%, MgO: 0 to 8%, CaO: 0 to 14.5%, SrO: 0 to 24%, BaO: 0 to 13.5%, $ZrO_2$: 0 to 5%, and SnO: 0 to 3%, provided that MgO+CaO+SrO+BaO is 9 to 29.5%, and a total content of alkali metal oxides is 0.1% or less.

6. The method for producing a float glass according to claim 5, wherein the float glass contains, in terms of % by mass based on oxides, $SiO_2$: 58 to 66%, $Al_2O_3$: 15 to 22%, $B_2O_3$: 5 to 12%, MgO: 0 to 8%, CaO: 0 to 9%, SrO: 3 to 12.5%, BaO: 0 to 2%, and SnO: 0 to 1%, provided that MgO+CaO+SrO+BaO is 9 to 18%, and a total content of alkali metal oxides is 0.1 % or less.

7. The method for producing a float glass according to any one of claims 1 to 4, wherein the float glass comprises, in terms of % by mass based on oxides, $SiO_2$: 65 to 75%, $Al_2O_3$: 0 to 3%, CaO: 5 to 15%, MgO: 0 to 15%, $Na_2O$: 10 to 20%, $K_2O$: 0 to 3%, $Li_2O$: 0 to 5%, $Fe_2O_3$: 0 to 3%, and $TiO_2$: 0 to 5%, $CeO_2$: 0 to 3%, BaO: 0 to 5%, SrO: 0 to 5%, $B_2O_3$: 0 to 5%, ZnO: 0 to 5%, $ZrO_2$: 0 to 5%, $SnO_2$: 0 to 3%, and $SO_3$: 0 to 0.5%.

Fig. 1

EP 2 735 551 A1

Fig. 2

EP 2 735 551 A1

# INTERNATIONAL SEARCH REPORT

| | International application No. |
|---|---|
| | PCT/JP2012/068088 |

**A. CLASSIFICATION OF SUBJECT MATTER**
*C03B18/20*(2006.01)i, *C03C3/078*(2006.01)i, *C03C3/085*(2006.01)i, *C03C3/087*
(2006.01)i, *C03C3/089*(2006.01)i, *C03C3/091*(2006.01)i, *C03C3/093*(2006.01)i

According to International Patent Classification (IPC) or to both national classification and IPC

**B. FIELDS SEARCHED**

Minimum documentation searched (classification system followed by classification symbols)
C03B18/00-18/22

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2010/023419 A1 (SAINT-GOBAIN GLASS FRANCE), 04 March 2010 (04.03.2010), claims 12, 17; description, page 10, lines 13 to 19; page 12, line 18 to page 13, line 5; examples & JP 2012-501285 A claims 12, 17; paragraphs [0031], [0039]; examples & EP 2331472 A1 & US 2011/0135938 A1 & KR 10-983476 B1 & CN 102137819 A | 1-3,7 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 October, 2012 (11.10.12) | 23 October, 2012 (23.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/068088 |

C (Continuation).    DOCUMENTS CONSIDERED TO BE RELEVANT

| Category* | Citation of document, with indication, where appropriate, of the relevant passages | Relevant to claim No. |
|---|---|---|
| X | JP 11-43350 A  (Nippon Electric Glass Co., Ltd.), <br> 16 February 1999 (16.02.1999), <br> claim 2; paragraphs [0022], [0036] <br> & US 2002/0011080 A1 <br> claim 6; paragraphs [0027], [0048] <br> & US 2003/0121288 A1 | 1,2,4-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4641915 B

- JP 2011159288 A